# EUROPÄISCHE PATENTANMELDUNG

(11) **EP 2 711 347 A1**
(43) Veröffentlichungstag der Anmeldung: **26.03.2014**
(21) Anmeldenummer: 12006655.0
(22) Anmeldetag: 21.09.2012
(51) Int. Cl.: C04B 40/00

(54) **Verfahren und Mittel zur Aufbereitung von Gesteinskörnungen**

(71) Anmelder: HeidelbergCement AG, 69120 Heidelberg (DE)
(72) Erfinder: Wortmann, Kai, 37603 Holzminden (DE)
(74) Vertreter: Patentanwälte Zellentin & Partner

(57) **Zusammenfassung**

Die Erfindung betrifft ein Mittel zur Aufbereitung von Gesteinskörnungen, welche mit Tonmineralen verunreinigt sind, welches zumindest ein tondeaktivierendes Mittel und zumindest eine kationische Sedimentationshilfe umfasst. Die Erfindung betrifft weiterhin ein Verfahren zur Aufbereitung von Gesteinskörnungen, bei dem die Gesteinskörnung, welche mit Tonmineralen verunreinigt ist, mit zumindest einem tondeaktivierenden Mittel und zumindest einer kationischen Sedimentationshilfe versetzt wird.

## Beschreibung

Die vorliegende Erfindung betrifft ein Verfahren und ein Mittel zur Aufbereitung von Gesteinskörnungen.

Als Gesteinskörnung werden im Bauwesen natürliche und künstliche Gesteinskörner bezeichnet. Sie stammen entweder aus natürlichen Lagerstätten oder fallen bei der Wiederverwertung von Baustoffen oder als industrielles Nebenerzeugnis an. Die Gesteine liegen entweder als Rundkorn oder in gebrochener Form vor. Weitere Bezeichnungen sind Betonzuschlag, Mineralstoffgemisch, Mineralgemisch oder Mineralstoff, die nicht mehr in den Normen verwendet werden. Besonders der allgemeinere Begriff Zuschlag oder Zuschlagstoff wird noch synonym verwendet.

Die Gesteinskörnung wird zusammen mit einem Bindemittel (wie etwa Zement oder Kalk) und Zugabewasser zu Beton und Mörtel verarbeitet. Verbindet man die Gesteinskörnung mit Bitumen, kann Asphalt hergestellt werden. Um die geforderten Eigenschaften des Baustoffs zu erhalten, sind die Gesteinskörnungen in ihrer Zusammensetzung entsprechend zusammenzustellen. Die Anforderungen an Gesteinskörnungen für Beton regelt z.B. die Europäische Norm EN 12620.

Gesteinskörnungen müssen ausreichend verwitterungsbeständig sein und dürfen nur geringe Mengen von Bestandteile enthalten, die quellen, zerfallen, sich lösen oder chemisch umsetzen können (wie etwa mergelige und tonige Körner, einige Ton- und Glimmermineralien, Pyrit, Markasit, Gips, Calciumoxid, Magnesiumoxid). Diese Eigenschaft wird auch als Raumbeständigkeit bezeichnet.

Gesteinskörnungen dürfen nicht verunreinigt sein und keine schädlichen Mengen von Metallen, Kunststoffen oder Stoffen organischen Ursprungs, wie Holz oder Pflanzenreste, enthalten. Beim Gewinnen, Aufbereiten und Lagern von Gesteinskörnungen ist darauf zu achten, dass diese ihre Eigenschaften behalten und die gestellten Anforderungen weiterhin erfüllen können.

Natürliche Gesteinskörnungen bestehen aus mineralischem Vorkommen, das ausschließlich einer mechanischen Aufbereitung unterzogen wurde. Hierzu zählen die ungebrochenen Kiese und Sand, sowie Schotter, Splitte, Brechsande und Felsgesteine. Felsgestein wird im Steinbruch gewonnen und mit Hilfe von Brechern zu einem Korngemisch verarbeitet. Anschließend separieren Siebe und andere Trenneinrichtungen (Sichter usw.) die einzelnen Körnungsklassen. Kies und Sande werden in Kiesgruben gewonnen, die ebenfalls durch Siebe in einzelne Körnungsklassen getrennt werden. Kiese > 32 mm werden zum Teil mit Brechern zerkleinert, wodurch Splitte und Brechsande entstehen. Während der Aufbereitung werden die Gesteine auch gewaschen, um sie von Verschmutzungen und organischen oder bindigen Bestandteilen zu reinigen.

Industriell hergestellte Gesteinskörnungen sind mineralischen Ursprungs, und werden unter Einfluss von thermischen oder sonstigen Prozessen produziert. Folgende Gesteinskörnungen stammen aus industriellen Nebenerzeugnissen: Hochofenstückschlacke, Hüttensand, Stahlwerksschlacke, Schlacke aus der Kupfererzeugung, Gießerei-Kupolofenschlacke, Steinkohlenflugasche, Schmelzkammergranulat, Kesselasche aus Steinkohlenfeuerung, Gießereirestsand, Hausmüllverbrennungsasche.

Rezyklierte Gesteinskörnungen entstehen durch die Aufbereitung anorganischen Materials, das zuvor als Baustoff eingesetzt war. Hierzu zählen ausgebaute, aufbereitete und wieder eingebaute Asphalte und Betone.

Die Kornzusammensetzung des Betonzuschlags bestimmt die Dichte und den Wasseranspruch einer Betonmischung, der zur Erzielung einer ausreichenden Verarbeitbarkeit erforderlich ist. Die Kornzusammensetzung der Gesteinskörnungen wird durch Siebversuche mit Prüfsieben bestimmt und mit Sieblinien dargestellt, welche den Anteil des Zuschlages in Gewichtsprozenten zeigen, der kleiner als die zugehörige Korngröße ist. Der Zuschlag kann einer stetigen oder einer unstetigen Sieblinie folgen. Als Größtkorn sind in vielen Märkten 8, 16, 32 oder 63 mm üblich. Es sollte so groß wie möglich gewählt werden, da sich so aufgrund des geringeren Wasseranspruches die Zementzugabe vermindern lässt. Das Größtkorn ist aber durch konstruktive Randbedingungen wie Bauteilabmessungen und Bewehrungsdichte begrenzt. Die Betonzuschlagstoffe bis 0,125 mm bilden zusammen mit dem Zement den Mehlkorngehalt, und beeinflussen somit die Verarbeitbarkeit in besonderem Maße.

Ein Problem bei der Aufbereitung von Gesteinskörnungen stellt Ton dar. Ein in Gesteinskörnungen enthaltener Tonanteil führt zu negativen Einflüssen auf die Eigenschaften von zementgebundenen Baustoffen wie Mörtel und Beton. So steigt der Wasseranspruch, die Dauerhaftigkeit kann durch nach dem Abbinden eindringendes Wasser und Quellen des Tons beinträchtigt werden.

Zur Lösung des Problems wurden verschiedenste tondeaktivierende Mittel vorgeschlagen, siehe z.B. WO 2010/005117 A1, WO 2010/040796 A1, US 2008/0060556 A1, US 2007/0287794, US 2002/0121229 A1, FR 2 875 496 A1, EP 1 838 643 B1 und EP 1 799 624 B1. Diese Mittel sind kationischer Natur und sollen mit der negativen Oberfläche der Tonminerale reagieren. Die zugrunde liegende Reaktion beruht auf einem Ladungsausgleich an den äußeren und inneren Oberflächen des Tonminerals und einer damit einhergehenden Verdrängung dort lokalisierter Kationen. Dies führt zu einer Aufweitung der Schichtsilikatstruktur und einer stärkeren Dispergierung der Tonpartikel.

Die Aufbereitung von Sanden umfasst typischerweise die folgenden Verfahrensschritte:
- Gewinnung
- Zerkleinerung (Brechen)
- Fraktionierung (Sieben)
- Reinigung (Waschen).
Beim Waschen bereiten die tondeaktivierenden Mittel Schwierigkeiten. Durch die stärkere Dispergierung ergibt sich ein unerwünschter Einfluss auf die Korndichte und die Korngrößenverteilung der Tonpartikel. Das Sedimentationsverhalten verschlechtert sich dadurch deutlich, d.h. die Sedimentation verlangsamt sich. Dies führt zu deutlich längeren Verweilzeiten z.B. für das Abscheiden von Feinstpartikeln aus Rück- und Sedimentationsbecken der Sandwäschen. Ein Zurückführen von gereinigtem Wasser in den Kreislauf wird erschwert.

Es besteht daher die Aufgabe, Wege für die Aufbereitung von Gesteinskörnungen, welche mit Tonmineralen verunreinigt sind, zu finden und dabei die negativen Auswirkungen der tondeaktivierenden Mittel zu vermeiden.

Im Bereich Wasser bzw. Abwasserwirtschaft werden bei der Aufbereitung von Wasser insbesondere zur Abscheidung von Schwebteilchen sogenannte Sedimentationshilfen zugegeben. Diese sind gut bekannt und bewirken ein Zusammenballen/eine Flockung der Partikel. Sedimentationshilfen sind typischerweise ionischer Natur. Sedimentationshilfen müssen auf die abzuscheidenden Stoffe abgestimmt werden, um wirken zu können. Für Gesteinskörnungen, deren Tongehalt mit einem kationischen, tondeaktivierenden Mittel unschädlich gemacht wurde, wären anionische Sedimentationshiflsmittel naheliegend. Versuche mit Liginisulfonaten zeigten jedoch, dass derartige Sedimentationshilfen in Gegenwart der tondeaktivierenden Mittel nicht wirksam sind.

Überraschend wurde nun gefunden, dass sich eine Kombination von kationischen, tondeaktivierendem Mittel und kationischer Sedimentationshilfe zur Aufbereitung von Gesteinskörnungen eignet, welche mit Tonmineralen verunreinigt sind. Die Wirkung des tondeaktivierenden Mittels wird durch die Kombination mit der Sedimentationshilfe nicht beeinträchtigt und diese entfaltet eine gute Wirksamkeit. Die Sedimentationshilfe zeigt in einem Waschschritt ebenfalls die gewünschte Wirkung, wobei es von Vorteil ist, dass nicht nur Ton sondern auch anderes Mehlkorn besser sedimentiert. Beim Mischen von tondeaktivierendem Mittel und Sedimentationshilfe wird zwar teilweise eine Erhöhung der Viskosität beobachtet, die Wirkungen beider Komponenten blieben trotzdem erhalten.

Die Erfindung löst daher die o.g. Aufgabe durch ein Mittel zur Aufbereitung von Gesteinskörnungen, welche mit Tonmineralen verunreinigt sind, welches zumindest ein tondeaktivierendes Mittel und zumindest eine kationische Sedimentationshilfe umfasst. Die Aufgabe wird weiterhin durch ein Verfahren zur Aufbereitung von Gesteinskörnungen gelöst, bei dem die Gesteinskörnung, welche mit Tonmineralen verunreinigt ist, mit zumindest einem tondeaktivierenden Mittel und zumindest einer Sedimentationshilfe versetzt wird, vorzugsweise mit einer Zusammensetzung, die zumindest ein tondeaktivierendes Mittel und zumindest eine Sedimentationshilfe umfasst.

Als tondeaktivierendes Mittel eignen sich kationische, hochmolekulare wasserlösliche Polyelektrolyte synthetischen und/oder natürlichen Ursprungs wie beispielsweise
- kationische lineare oder verzweigte Polyamine
- Poly-Diallyldiethyl- oder Vinyl-Ammoniumsalze
- Gemische aus Polyalkylenglykol und/oder Polyalkoxylaten bzw. Polycarboxylaten und/oder Ammonium Derivaten
- Gemische von poly-kationischen Verbindungen und Polyhydroxy- oder Hydroxycarbonsäuren. Bevorzugte tondeaktivierende Mittel sind Gemische von poly-kationischen Verbindungen mit Polyhydroxy- oder Hydroxycarbonsäuren, wie sie z.B. in WO 2010/005117 A1 beschrieben sind.

Sedimentationshilfen sind vorzugsweise Polyacrylamid, Acrylamid-Copolymere und organisch modifzierte Aluminiumsalze. Besonders bevorzugt sind Polyacrylamide und Acrylamid-Copolymere.

Die erfindungsgemäßen Mittel können vorzugsweise als Lösung, insbesondere als wässrige Lösung, formuliert werden. Gewünschtenfalls können weitere Komponenten enthalten sein. Es ist alternativ möglich, die beiden Komponenten einzeln in beliebiger Reihenfolge zuzufügen, unabhängig voneinander als Lösung, vorzugsweise als wässrige Lösung, oder Reinsubstanz.

Die Aufbereitung erfolgt erfindungsgemäß, indem die rohe Gesteinskörnung gewonnen und das erfindungsgemäße Mittel bzw. die Komponenten tondeaktivierendes Mittel und Sedimentationshilfe der Gesteinskörnung zugefügt wird bzw. werden. Dabei werden die in der Gesteinskörnung verbleibenden Tonminerale deaktiviert. Bei einer Reinigung durch Waschen bewirkt die Sedimentationshilfe ein rasches, weitgehendes bis vollständiges Absetzen des Tons und ggfs. weiterer Substanzen eines Mehlkorngehaltes in der Gesteinskörnung. Der im Waschwasser enthaltene Ton zeigt ein gutes Sedimentationsverhalten, vergleichbar dem nicht deaktivierter Tone. Das Waschwasser kann daher leicht gereinigt und in das Verfahren zurückgeführt werden. Die Behandlungszeiten sind kurz, maximal wenige Minuten. Die Wirksamkeit kann mit den vorgeschriebenen Messverfahren Methylenblauwert und Sandequivalent nachgewiesen werden.

Die Dosierung richtet sich nach dem Gehalt an Tonmineralen in der Gesteinskörnung, welche in an sich bekannter Weise bestimmt wird. Die Dosierung des tondeaktivierenden Mittels beträgt zweckmäßig von 1 bis 10 Gew.-%, vorzugsweise 2 bis 5 Gew.-% Wirkstoff bezogen auf den Tongehalt. Eine Dosierung von 0,1 bis 3 Gew.-%, vorzugsweise 1,6 bis 2,8 Gew.-% der Sedimentationshilfe bezogen auf den Tongehalt oder den Mehlkorngehalt hat sich bewährt. Vorteilhaft wird nicht nur die Sedimentation von Ton sondern auch von anderen Feinanteilen gefördert. Daher kann die Dosierung der Sedimentationshilfe auch auf den Mehlkorngehalt bezogen werden. Die Mischung der Komponenten kann ein beliebiges Mischungsverhältnis zueinander aufweisen. Bevorzugt sind Gewichtsverhältnisse tondeaktivierende(s) Mittel zu Sedimentationshilf(en) von 1:0,01 bis 1:0,1, insbesondere von 1:0,03 bis 1:0,08, jeweils bezogen auf die Summe aller tondeaktivierenden Mittel bzw. Sedimentationshilfen. Die Dosierung der erfindungsgemäßen Kombination von tondeaktivierendem(n) Mittel(n) und Sedimentationshilfe(n) erfolgt vorzugsweise in einer Menge von 1 bis 10 Gew.-%, insbesondere von 2 bis 5 Gew.-%, bezogen auf den Tongehalt. Bei einer Einzeldosierung kann die Zugabe der Komponenten in beliebiger Reihenfolge erfolgen, sowohl zuerst die Sedimentationshilfe und danach das tondeaktivierende Mittel als auch zuerst das tondeaktivierende Mittel und dann die Sedimentationshilfe.

Das erfindungsgemäße Mittel und Verfahren bewährt sich bei Gesteinskörnungen, insbesondere Sanden, die in einem erhöhten Anteil an Mehlkorn, typischerweise mehr als 3 Gew.-%, einen störenden Tongehalt haben, z.B. mehr als 1 Gew.-%. Dies sind vor allem Brechsande und natürliche Sande, die in Flussniederungen gewonnen werden.

Die erfindungsgemäße Aufbereitung zeichnet sich durch eine sehr einfache Anwendung aus, es ist vorzugsweise nur eine Lösung zuzugeben, der Aufwand und die Abfallstoffmenge bei der Aufbereitung von Gesteinskörnung mit einem Gehalt an Tonmineralen wird deutlich reduziert.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Der Sand wurde homogenisiert und der darin enthaltene Tongehalt mit 12 g/kg bestimmt. Einzelproben wurden entnommen und der Methylenblauwerte an jeweils zwei Einzelproben bestimmt. Es wurden außerdem je zwei Einzelproben Sand in verschiedener Weise behandelt und der Methylenblauwert bestimmt. Dabei erfolgte eine Dosierung von 2 % des erfindungsgemäßen Mittels (Wirkstoff des tondeaktivierenden Mittels EXP-CM 1 Grace Construction Products, Belgium) bezogen auf den Tongehalt im Sand. Dies entspricht 0,96 g EXP-CM 1 (25 %-ige Lösung, d.h. Dosierung von 0,24 g Wirkstoff,) oder 0,32 g der Sedimentationshilfe Kerafloc K 4033 (Zschimmer & Schwarz GmbH & Co KG, Deutschland) oder einer Lösung hergestellt durch Mischen beider Komponenten. Die Zugabe erfolgte als Lösung oder als Einzelkomponenten in verschiedener Reihenfolge. Der Methylenblauwert wurde entsprechend DIN EN 933-9 (1998) wie folgt bestimmt. Eine Teilprobe, die mindestens 200g der Kornklasse 0/2 mm enthält wurde bei 110 ± 5 °C bis zur Massenkonstanz getrocknet, dann ließ man sie abkühlen. Die Probe wurde gewogen und ihre Masse auf 1 g genau festgehalten. Dann wurde schrittweise Farbstoff zugegeben. Nach jeder Zugabe des Farbstoffes wurde mit Hilfe eines Glasstabes ein Tropfen der Suspension entnommen und auf Filtrierpapier aufgebracht. Der sich bildende Fleck besteht aus einer kräftig blau gefärbten, zentral angeordneten Materialablagerung, die von einer farblosen feuchten Zone umgeben ist. Die Prüfung ist als positiv zu werten, wenn sich innerhalb der feuchten Zone um die zentrale Materialablagerung ein Saum aus einem beständigen hellblauen Ring von etwa 1 mm bildet. Der Methylenblau-Wert wird in Gramm je Kilogramm der Kornklasse 0/2 mm ausgedrückt und wird auf 0,1 g angegeben. Die Ergebnisse sind in Tabelle 1 dargestellt.

**Tabelle 1: Methylenblauwerte**

| | 1. Probe | 2. Probe | Mittelwert |
|---|---|---|---|
| Sand unbehandelt | 1,8 g/kg | 1,8 g/kg | 1,8 g/kg |
| Sand mit EXP-CM1 | 1,4 g/kg | 1,4 g/kg | 1,4 g/kg |
| Sand Kerafloc | 2,0 g/kg | 2,0 g/kg | 2,0 g/kg |
| Sand mit Gemisch EXP-CM1 + Kerafloc | 1,3 g/kg | 1,3 g/kg | 1,3 g/kg |
| Sand mit EXP-CM1, danach Kerafloc | 1,3 g/kg | 1,3 g/kg | 1,3 g/kg |
| Sand mit Kerafloc, danach EXP-CM1 | 1,2 g/kg | 1,2 g/kg | 1,2 g/kg |

Die Ergebnisse belegen, dass durch die Kombination die Wirksamkeit der tondeaktivierenden Komponente nicht beeinträchtigt sondern eher unterstützt wird. Das Ziel ist ein möglichst geringer Wert als Indikator von nichtreaktiven Oberflächen. Der Methylenblauwert ist ein halb quantitativer Nachweis von adsorbtionsfähigen Tonen. Über einem Kationenaustausch durch Einlagerung von Methylenblauionen als Farbindikator zum Sättigungsnachweis. Hier als Indikator des Deaktivierungsgrades genützt.

### Beispiel 2

Für Sandproben, die in gleicher Weise wie in Beispiel 1 unbehandelt und mit tondeaktivierendem Mittel, Sedimentationshilfe und erfindungsgemäßem Mittel behandelt wurden, wurde das Sandequivalent gemäß DIN EN 933-8 (1998) wie folgt gemessen. Eine Einzelmessprobe und eine geringe Menge der Waschmittellösung wurden in einen Messzylinder gegossen und geschüttelt, um von den größeren Körnern der Messprobe die anhaftenden Tonbestandteile abzulösen. Die Gesteinskörnung wurde anschließend unter Zugabe von weiterem Waschmittel ausgewaschen, wodurch die feinen Partikel über der feinen Gesteinskörnung in Suspension gebracht wurden. Nach einer bestimmten Dauer wurde der Sandäquivalent-Wert (SE) als Anteil der Höhe der Sedimentschicht in Prozent der Gesamthöhe des Sediments und der Suspension im Messzylinder berechnet. Die Messprobe muss mindestens 120 g betragen und ist um den Feuchtegehalt zu korrigieren der an einer separaten Probe ermittelt wurde. Die Probe in jedem Messzylinder ist 20,00 ± 0,25 min ohne Störung und frei von Erschütterung absetzen zu lassen. Am Ende dieser Zeitspanne ist mit dem Lineal die Höhe h1 des oberen Niveaus der Ausflockung als Entfernung zum Boden des Messzylinders zu messen. Der Prüfstempel ist vorsichtig in den Zylinder zu senken, bis er auf dem Sediment aufsitzt. Die Manschette ist auf dem Messzylinder auszurichten und am Stab des Prüfstempels zu befestigen. Mit dem Lineal, das in den Schlitz der Manschette eingeführt wird, ist die Höhe des Bodensatzes h2 durch Messen des Abstands zwischen der unteren Fläche des Prüfstempelkopfes und der oberen Fläche der Manschette zu bestimmen. Die Höhen h1 und h2 sind auf den nächsten Millimeter zu notieren. Das Verhältnis (h2/h1) × 100 ist auf eine Dezimalstelle zu berechnen. Wenn die beiden Werte um mehr als 4 voneinander abweichen, muss die Prüfung wiederholt werden. Der Sandäquivalent-Wert SE ist, auf die nächste ganze Zahl gerundet aus dem ermittelten Verhältnisse (h2/h1) × 100 zu berechnen. Die Ergebnisse sind in Tabelle 2 dargestellt.

**Tabelle 2**

| | 1. Probe | 2. Probe | Mittelwert |
|---|---|---|---|
| Sand unbehandelt | 35 | 33 | 34 |
| Sand mit EXP-CM1 | 25 | 23 | 24 |
| Sand Kerafloc | 49 | 48 | 49 |
| Sand mit Gemisch EXP-CM1 + Kerafloc | 54 | 56 | 55 |
| Sand mit EXP-CM1, danach Kerafloc | 54 | 55 | 56 |
| Sand mit Kerafloc, danach EXP-CM1 | 52 | 54 | 53 |

Die Ergebnisse belegen, dass auch für die Kombination die Wirksamkeit der Sedimentationshilfe voll erhalten bleibt. Ziel ist hier ein möglichst hoher Wert. Er dient als Indikator für Feinanteilsmengen und/oder deren Partikelgröße. Das Sandäquivalent ist ein Maß für das Vorhandensein von Feinstanteilen in Sanden mit strenger Abhängigkeit zur Korngröße. Das Verfahren ist zeitabhängig und somit geeignet Unterschiede im Sedimentationsverhalten insbesondere der Geschwindigkeiten ebenfalls darzustellen.

Es gelingt somit, durch die erfindungsgemäße Aufbereitung auch für tonhaltige Sande eine Eignung als Gesteinskörnung für Beton nach dem Entwurf für EN 12620 zu erreichen. Mit dem erfindungsgemäßen Mittel behandelte Gesteinskörnungen erfüllen höhere Anfroderungen als vor der Behandlung. Es können dadurch auch bisher nicht brauchbare bzw. nur nach hohem Reinigungsaufwand geeignete Gesteinskörnungen nutzbar gemacht werden.

### Beispiel 3

Der Sand wurde homogenisiert und der darin enthaltene Tongehalt mit 10,9 g/kg bestimmt. Einzelproben wurden entnommen. Je zwei Einzelproben Sand wurden in verschiedener Weise behandelt und das Sandequivalent gemäß DIN EN 933-8 (1998) wie in Beispiel 2 gemessen. Dabei erfolgte eine Dosierung von 5 % EXP-CM 1 Wirkstoff (25 %-ige Lösung, Grace Construction Products, Belgien) bezogen auf den Tongehalt. Dies entspricht 2,2 g EXP-CM 1 d.h. einer Dosierung von 0,55 g Wirkstoff. Außerdem erfolgte eine Behandlung des wie zuvor behandelten Sandes mit 3,1 % des Ligninsulfonats (27 %-ige Lösung), entsprechend 1,25 g Ligninsulfonat d.h. 0,34 g Wirkstoff bezogen auf den Tongehalt. Die Ergebnisse fasst Tabelle 3 zusammen.

**Tabelle 3**

| | 1. Probe | 2. Probe | Mittelwert |
|---|---|---|---|
| Sand mit EXP-CM1 | 43 | 41 | 42 |
| Sand mit EXP-CM 1 danach Ligninsulfonat | 41 | 40 | 41 |

Die Ergebnisse belegen, dass die naheliegende Kombination aus kationischem Tondeaktivierungsmittel und anionischer Sedimentationshilfe nicht die gewünschte Wirksamkeit entfaltet.

## Patentansprüche

1. Verfahren zur Aufbereitung von Gesteinskörnungen, die einen Tonanteil enthalten, durch Zufügen von mindestens einem tondeaktivierenden Mittel, **dadurch gekennzeichnet, dass** eine kationische Sedimentationshilfe zugemischt wird.

2. Verfahren gemäß Anspruch 1, **dadurch gekennzeichnet, dass** als tondeaktivierendes Mittel kationische, hochmolekulare, wasserlösliche Polyelektrolyte synthetischen und/oder natürlichen Urspürungs verwendet werden.

3. Verfahren gemäß Anspruch 2, **dadurch gekennzeichnet, dass** das(die) tondeaktivierende(n) Mittel ausgewählt ist(sind) unter
- kationischen linearen oder verzweigten Polyaminen
- Poly-Diallyldiethyl- oder Vinyl-Ammoniumsalzen
- Gemischen aus Polyalkylenglykolen und/oder Polyalkoxylaten bzw. Polycarboxylaten und/oder Ammonium Derivaten
- Gemischen von poly-kationischen Verbindungen und Polyhydroxy- oder Hydroxycarbonsäuren.

4. Verfahren gemäß mindestens einem der Ansprüche 1 bis 3, **dadurch gekennzeichnet, dass** als Sedimentationshilfe Polyacrylamide, Acrylamid-Copolymere und/oder organisch modifizierte Aluminiumsalze, vorzugsweise Polyacrylamide, verwendet werden.

5. Verfahren gemäß mindestens einem der Ansprüche 1 bis 4, **dadurch gekennzeichnet, dass** von 1 bis 10 Gew.-%, vorzugsweise von 2 bis 5 Gew.-% einer Kombination von tondeaktivierendem Mittel und Sedimentationshilfe bezogen auf das Gewicht des Tonanteils zugefügt werden.

6. Verfahren gemäß mindestens einem der Ansprüche 1 bis 4, **dadurch gekennzeichnet, dass** jeweils einzeln 1 bis 10 Gew.-%, vorzugsweise 2 bis 5 Gew.-% tondeaktivierendes Mittel bezogen auf den Tongehalt und 0,1 bis 3 Gew.-%, vorzugsweise 1,6 bis 2,8 Gew.-% Sedimentationshilfe bezogen auf den Tongehalt oder den Mehlkorngehalt der Gesteinskörnung zugefügt werden.

7. Mittel zur Aufbereitung von Gesteinskörnungen, **dadurch gekennzeichnet, dass** es zumindest ein tondeaktivierendes Mittel und zumindest eine kationische Sedimentationshilfe enthält.

8. Mittel gemäß Anspruch 7, **dadurch gekennzeichnet, dass** es das tondeaktivierende Mittel und die Sedimentationshilfe in einem Gewichtsverhältnis von 1:0,01 bis 1:0,1, insbesondere von 1:0,03 bis 1:0,08, enthält.

9. Mittel gemäß Anspruch 7 oder 8, **dadurch gekennzeichnet, dass** das(die) tondeaktivierende(n) Mittel ausgewählt ist(sind) unter
- kationischen linearen oder verzweigten Polyaminen
- Poly-Diallyldiethyl- oder Vinyl-Ammoniumsalzen
- Gemischen aus Polyalkylenglykolen und/oder Polyalkoxylaten bzw. Polycarboxylaten und/oder Ammonium Derivaten
- Gemischen von poly-kationischen Verbindungen und Polyhydroxy- oder Hydroxycarbonsäuren.

10. Mittel gemäß mindestens einem der Ansprüche 7 bis 9, **dadurch gekennzeichnet, dass** die Sedimentationshilfe(n) ausgewählt ist(sind) unter
- Polyacrylamid und Acrylamid-Copolymeren und
- organisch modifzierten Aluminiumsalzen.

11. Mittel gemäß mindestens einem der Ansprüche 7 bis 10, **dadurch gekennzeichnet, dass** es eine Lösung, vorzugsweise eine wässrige Lösung ist.
